Europäisches Patentamt

European Patent Office

Office européen des brevets

(11) Publication number: **0 121 781**

**B1**

# EUROPEAN PATENT SPECIFICATION

(45) Date of publication of patent specification: **12.04.89**

(51) Int. Cl.⁴: **C 01 B 31/02, C 04 B 35/52**

(21) Application number: **84102495.3**

(22) Date of filing: **08.03.84**

(54) Process for manufacturing glasslike carbon material.

(30) Priority: **09.03.83 JP 39709/83**
**10.02.84 JP 24004/84**
**10.02.84 JP 24005/84**
**10.02.84 JP 24006/84**
**10.02.84 JP 24007/84**
**14.02.84 JP 26297/84**

(43) Date of publication of application:
**17.10.84 Bulletin 84/42**

(45) Publication of the grant of the patent:
**12.04.89 Bulletin 89/15**

(84) Designated Contracting States:
**DE FR GB IT NL**

(56) References cited:
**FR-A-2 380 985**
**GB-A-1 033 277**
**GB-A-1 135 816**
**GB-A-1 360 403**
**GB-A-1 485 528**
**US-A-3 859 421**

**JOURNAL OF MATERIALS SCIENCE, vol. 19,
no. 3, March 1984, pages 1022-1028, London,
GB; G. BHATIA et al. "Conversion of phenol
formaldehyde resin to glass-like carbon"**

(73) Proprietor: **Kao Corporation**
**14-10, Nihonbashi Kayabacho 1-chome**
**Chuo-Ku Tokyo 103 (JP)**

(72) Inventor: **Yamauchi, Michihide**
**1450 Nishihama**
**Wakayamashi Wakayama (JP)**
Inventor: **Kishine, Nobuyuki**
**2990-2 Ishiicho**
**Utsunomiyashi Tochigi (JP)**
Inventor: **Imamura, Tetsuya**
**2990-6 Ishiicho**
**Utsunomiyashi Tochigi (JP)**

(74) Representative: **Dipl.-Ing. H. Marsch Dipl.-Ing. K.
Sparing Dipl.-Phys.Dr. W.H. Röhl Patentanwälte
Rethelstrasse 123
D-4000 Düsseldorf 1 (DE)**

(56) References cited:
**PATENT ABSTRACTS OF JAPAN, vol. 6, no.
122, (C-112)1000r, 7th July 1982; & JP - A - 57
51109 (KANEBO K.K.) 25-03-1982**

Courier Press, Leamington Spa, England.

## Description

Background of the invention

The present invention relates to a process for manufacturing a glasslike carbon material. More particularly, it relates to a process for manufacturing glasslike carbon material which has an extremely smooth surface after being ground to provide specular surface, and to molded products produced.

Generally, carbonization of a thermosetting resin in an inert atmosphere which resin has a three-dimensional reticular structure and which is insoluble as well as infusible results in a glass-like carbon material which prevents gas permeation, has a high degree of hardness and an isotropic structure. In addition to the characteristics found in conventional carbon materials such as light weight, good heat resistance, high electroconductivity, good corrosion rsistance, thermal conductivity, mechanical strength, sliding properties, etc., this glasslike carbon material has the additional characteristics of being homogeneous and free from carbon powder generation when used as a sliding material. This material has potential application in diversified areas such as electronics, nuclear power and space industries.

Use of the present glasslike carbon material as the substrate of a magnetic head is being contemplated for these desirable characteristics. Higher sliding properties, good resistance to wear and better specular surface by grinding are some of the essential features required of magnetic head substrates.

Furthermore, the use of the present glasslike carbon material in headsliders for magnetic heads is also being contemplated. The essential features required of it are lightness in weight as well as higher sliding properties and ease in grinding for specular surface. Because of these characteristics, a glasslike carbon material can be used as substrates for both magnetic heads and headsliders.

Microscopic observation of glasslike carbon materials according to the prior art reveals the presence of open pores and closed pores. The independent, i.e. not interconnected closed pores present inside the material do not affect its performance to prevent gas permeation. When such a glasslike carbon material is ground for application in uses requiring the specular surface, these closed pores inside the material become open pores as a consequence of the grinding. This results in serious defects.

In manufacturing thin film magnetic heads, it is necessary to deposit metal on glasslike carbon material by vaporization and sputtering, however, due to the reasons mentioned above, it was not possible to obtain a specular surface by grinding which surface is suitable for vapor deposition of metal.

In the manufacture of easily graphitized carbon material which is made of conventional raw materials such as pitch, the raw material becomes molten at one stage during carbonization, inevitably causing bubbles. In order to avoid this bubbling, carbonization under high pressure was attempted, reducing bubbles to a certain extent but not to an extent sufficient to prevent gas permeation.

On the other hand, when phenol resin or furan with a higher carbonization yield is used in carbonizing thermosetting resins, formation of substances with a lower boiling point such as water cannot be avoided in the step of obtaining a thermosetting substance, or a precursor thereof. Such substances will accumulate in the resin and create closed pores of a size exceeding the order of $\mu m$.

Pores are formed in thermosetting resin during its hardening process because of:

(1) air taken into the resin before hardening,

(2) substances with lower boiling points contained in the resin, unreacted components, and released water by condensation from the resin,

(3) released water from condensation as a by-product from the hardening process, gas formed during decomposition, etc.

Air contained preliminarily as mentioned in (1) above can be removed by a physical deforming procedure. Substances with lower boiling points contained in the resin, unreacted components and released water by condensation for the resin as in (2) can also be removed by heating under reduced pressure before hardening. However, released water from condensation at the time of hardening and the portion of gas formed during decomposition are extremely difficult to remove. This is especially so when a highly hydrophobic resin is used; a pool of water will be formed, which in turn will remain as large pores in the carbon material after its hardening carbonization.

Based on repeated studies, the present inventor has successfully obtained a glasslike carbon material which is substantially free from closed pores and therefore of problems in practical use by dissolving and dispersing in the base resin those substances with a lower boiling point formed as by-products during the hardening.

Detailed description of the invention

The present invention aims to provide a process for manufacturing a glasslike carbon material which is substantially free from pores, has a hard and tight structure and is capable of preventing gas permeation. According to the present invention, an initial condensate of a thermosetting resin is used which is capable of containing at least 20% by weight of water when said resin is in the state of an initial condensate before hardening and producing a glasslike carbon material. This initial condensate is selected to impart to the composition a suitable degree of hydrophilic property in order to prevent a pool formation of released water during hardening.

In a process for manufacturing glasslike carbon material by carbonizing and/or heating a thermosetting resin in an inert atmosphere at a temperature of at least 800°C, the present invention is characterized in the use of a thermosetting resin in the form of an initial condensate which may contain at least 20 wt.% of water.

According to this process a pool of substances with lower boiling points is removed before the thermosetting resin hardens. In other words, the thermosetting resin in the form of initial condensate is imparted "before hardening" with a certain degree of hydrophilic properties for dissolving at least 20% by weight of water contained therein in order to prevent substances with lower boiling points from being contained in the resin.

As used herein, the term "initial condensate" according to the present invention means a resin which prior to hardening may contain a small amount of raw material monomers and is a resin composition with increased viscosity due to condensation. "Inert atmosphere" means an atmosphere which contains no oxygen but normally comprises at least one kind of gas selected from the group of helium, argon, nitrogen, hydrogen and a halogen (e.g. bromine, chlorine or fluorine), or an atmosphere under reduced pressure or in vacuum.

The viscosity of the resin composition which is capable of containing at least 20% by weight of water in order to prevent formation of pores after hardening may differ depending on the type of the raw material resins employed, its degree of polymerization, blending ratio, etc. Results of studies by the present inventor indicate that a resin composition with a viscosity of from about 100 to about 8000 $10^{-3}$ P · s at 25°C is sufficient in order to achieve the objects of the invention.

When the initial condensate is not capable of containing at least 20 wt.% of water, it becomes impossible to completely disperse and dissolve the substances with lower boiling points in the base resin, or the by-products from hardening of the resin composition in the base resin. It is sufficient for the thermosetting resin according to the present invention to contain at least 20 wt.% of water before the resin hardens, but it should preferably contain at least 30 wt.% of water in order to that the substances with still lower boiling points can be more thoroughly dispersed and dissolved in the base resin. To determine if a resin is capable of containing water can be easily measured by adding water to the initial condensate until the condensate begins to become turbid and by estimating the water content. For those that have already been divided into two layers, the resin layer can be separated and the water content can be determined.

The initial condensate to be used in the present invention which is capable of containing at least 20 wt.% of water can be obtained by selecting among the types of available raw material resins, blending ratio, or by modification of the resin. The addition of certain modifying agents as described below may be easier.

Examples of thermosetting resins used in the present invention include phenol resin, epoxy resin, unsaturated polyester resin, furan resin, urea resin, melamine resin, alkyd resin, xylen resin, etc. Resins which meet the requirements of the present invention can be used as they are, in the form of mixtures of two or more resins, by blending, or by modification of the resin itself. Most preferred is a modified furan resin.

Besides the thermosetting resins such as phenol resin, furan resin and the like as mentioned above, and natural substances with a higher yield of naturally produced carbons such as asphalt or pitch other hydrophilic substances having a relatively higher yield of carbon such as lignin, cellulose, tragacanth gum, acacia, humic acid, various types of sugars, and the like can also be modified to obtain the thermosetting resin according to the present invention.

One specific example of such a thermosetting resin is a resin composition having the viscosity of from 100 to 8000 $10^{-3}$ P · s at 25°C comprising from 70 to 100 parts by weight of compound A and from 0 to 30 parts by weight of compound B, wherein A denotes one or more types of compounds selected from the group consisting of a monomer mixture, or a first monomer mixture containing either one or both of phenol and furfuyl alcohol, and formalin in the mole ratio of from 30:55 to 75:30, phenol resin, furan resin and phenol modified furan condensate. B denotes one or more types of compounds selected from the group consisting of a monomer mixture, or second monomer mixture containing either one or both of urea and melamine, and formalin in the mole ratio of from 30:55 to 75:30, and urea resin, and melamine resin. If the hardening is commenced directly from the raw material monomer rather than from the initial condensate, resins which uniformly dissolve at least 20 wt.% of water contained therein at the required viscosity of from 100 to 8000 $10^{-3}$ P · s at 25°C can be used to obtain glasslike carbon material according to the present invention.

In the above example, when a monomer mixture, or first monomer mixture containing both of phenol and furfuryl alcohol, and formalin in a predetermined ratio is used as compound A, or when a phenol modified furan co-condensate is used as compound A, from 70 to 100 parts by weight of the compound A can be used. However, if a monomer mixture, or first monomer mixture containing either one of phenol or furfuryl alcohol, and formalin in a predetermined ratio is used as compound A, or in case a phenol resin or furan resin is used as compound A, it is preferable to use from 70 to 90 parts by weight of compound A and from 10 to 30 parts by weight of compound B.

Also, in case a mixture of phenol and formalin is used as compound A, the ratio therebetween is preferably from 1:3 to 1:0.5, and in case a mixture of furfuryl alcohol and formalin is used as compound A, the ratio therebetween is preferably from 1:1 to 1:0. In case a mixture of urea and formalin is used as compound B, the ratio therebetween is preferably from 1:2 to 1:0.5, and in case a mixture of melamine and formalin is used as compound B, the ratio therebetween is preferably from 1:6 to 1:0.5.

Another example of the thermosetting resins is a resin composition obtained by co-condensing phenol, furfuryl alcohol and formalin and composed of from 15 to 40 of phenol, from 15 to 35 of furfuryl alcohol and from 30 to 55 formalin based on the mole ratio converted to monomer.

A further example of the thermosetting resin is a resin composition having the viscosity of from 100 to 8000 $10^{-3}$ P·s at 25°C comprising from 70 to 100 parts by weight of compound C, from 0 to 15 parts by weight of compound D, and from 0 to 15 parts by weight of compound E, wherein the compound C denotes one or more types of compounds selected from the group of a monomer mixture, or third monomer mixture containing either one or both of phenol and furfuryl alcohol, and formalin in the mole ratio from 30:55 to 75:30, phenol resin, furan resin and phenol modified furan condensate. Compound D denotes one or more types of compounds selcted from the group consisting of lignin, modified resin and modified cellulose, and compound E denotes one or more types of compounds selected from the group consisting of a monomer mixture, or a fourth monomer mixture containing either one or both of urea and melamine, and formalin in the mole ratio of from 30:55 to 75:30, urea resin and melamine resin.

When the hardening is started directly from the raw material monomer rather than from the initial condensate, resins which uniformly dissolve at least 20 wt.% of water contained therein at the required viscosity of from 100 to 8000 $10^{-3}$ P·s at 25°C can be used to obtain glasslike carbon material according to the present invention.

In the above example, when a monomer mixture of both of phenol and furfuryl alcohol, and formalin in a predetermined ratio is used as compound C, or a phenol modified furan condensate is used as compound C, from 70 to 100 parts by weight of compound C can be used. However, in case the monomer mixture of either one of phenol and fufuryl alcohol, and formalin in a predetermined ratio is used as compound C, or in case phenol resin is used as compound C, it is preferable to use from 70 to 90 parts by weight of compound C and from 10 to 30 parts by weight of compounds D and E.

Also, when a mixture of phenol and formalin is used as compound C, the ratio therebetween is preferably from 1:3.5 to 1:0.5, and when a mixture of furfuryl alcohol and formalin is used as compound C, the ratio therebetween is preferably from 1:1.2 to 1:0. Likewise, when a mixture of urea and formalin is used as compound E, the ratio therebetween is preferably from 1:2 to 1:0.5, and when a mixture of melamine and formalin is used as compound E, the ratio therebetween is preferably from 1:6 to 1:0.5.

Yet another example of a suitable thermosetting resin is a resin composition having the viscosity of from 100 to 8000 $10^{-3}$ P·s at 25°C comprising from 70 to 100 parts by weight of compound F and from 0 to 30 parts by weight of compound G, wherein compound F denotes one or more types of compounds selected from the group consisting of a monomer mixture, or fifth monomer mixture containing either one or both of phenol and fufuryl alcohol, and formalin in the mole ratio of from 1:4 to 1:0, phenol resin, furan resin and phenol modified furan condensate. Compound G denotes one or more types of compounds selected from the group consisting of lignin, modified resin and modified cellulose. When the hardening is commenced directly from the raw material monomer rather than from the initial condensate, resins which uniformly dissolve at least 20 wt.% of water contained therein at the viscosity of from 100 to 8000 $10^{-3}$ P·s at 25°C ccan be used to obtain a glasslike carbon material according to the present invention.

The above example, if a phenol modified furan co-condensate is used as compound F, from 70 to 100 parts by weight of the compound F can be used. However, if a phenol resin or furan resin is used as compound F, it is preferable to use from 70 to 90 parts by weight of compound F and from 10 to 30 parts by weight of compound G.

Also, in case a monomer mixture containing either one of phenol and furfuryl alcohol and formalin is used, it is preferable to use from 70 to 90 parts by weight of the compound F and from 10 to 30 parts by weight of the compound G to form the resin composition.

Furthermore, in case a mixture of phenol and formalin is used as a monomer mixture, the ratio therebetween is preferably from 1:4 to 1:0.5, and in case a mixture of furfuryl alcohol and formalin is used as monomer mixture, the ratio therebetween is preferably from 1:1.3 to 1:0.

As is apparent from the requirement that the resin compositions have a viscosity of from 100 to 8000 $10^{-3}$ P·s at 25°C during composition, the above mentioned resins are not in the solid state but occur in the fluid state, or substantially in the state of the initial condensate.

In place of formalin, a formaldehyde polymer may be used for making the above mentioned resin compositions.

Fillers can also be added during the practice of the present invention. Examples of suitable fillers include various carbon materials including, thermosetting resins such as carbon materials made from polyacrylnitrile, cellulose, rayon, pitch, lignin, phenol, furan, epoxy, alkyd, unsaturated polyester, xylen as well as various graphites, carbon blacks and the like. These fillers can be used in any form such as fibers, particles, powders or as mass.

A molded product made from the glasslike carbon material according to the present invention is characterized in that the pores contained in the glasslike carbon material are 0.1 μm or less in diameter and the ground surface of said product has specular structure.

The glasslike carbon material according to the present invention is a carbon which is difficult to graphitize, has an isotropic structure and prevents gas permeation. These properties can be confirmed by a conventional method such as X-ray diffraction, Raman spectroscopy or the like.

The number of pores contained in glasslike carbon material can be measured and obtained by the

4

microscopic observation of the ground surface, such as optical microscopes or scanning electron microscopes or the like.

The glasslike carbon material according to the present invention is substantially free from pores and exhibits an excellent sliding property because of only a few pores on the surface. If vapor deposition or sputtering deposition occurs on molded products which are made from a conventional glasslike carbon material, the deposited film will be easily exfoliated. In contrast, with the molded products made from the glasslike carbon material according to the present invention, the deposited film is not easily exfoliated. As already seen in the foregoing molded, products made from a glasslike carbon material according to the present invention have excellent properties which other conventional products do not exhibit.

One of the characteristics of the glasslike carbon material according to the present invention is that the diameter of the pores on the inside thereof is 0.1 μm or less, while with respect to conventional glasslike materials, there exist 1000 $10^{-3}$ P · s or more of pores which are 0.1 μm or more in diameter per 1 $mm^2$. This means that in a conventional process, it was impossible to obtain a suitable glasslike carbon material which is free from pores of 0.1 μm or more in diameter.

The glasslike material according to the present invention may include from 1 to 10 of pores in the range of from 0.1 to 0.5 μm in diameter per 1 $mm^2$ on its surface or sectional areas. From a practical view point, such a glasslike carbon material can be regarded as being substantially pore-free when compared with conventional glasslike materials.

In manufacturing molded products using such a glasslike carbon material which is substantially free from pores, conventional methods can be employed, such as, cutting, planing or grinding. Otherwise, precursors of the glasslike carbon materials, or a material in the state before it is sintered into a glasslike carbon material, can be molded into the desired shapes and thereafter sintered into molded products. Using these procedures, molded products having the width of 0.1 $mm^2$ or more can be molded into any desired shape or configuration such as a sheet, mass, board, various molded parts and the like. Also, molded products according to the present invention can be made into a specular surface by conventional methods, for example grinding the surface using aluminum powder.

An illustration of molding is as follows: the thermosetting resin according to the present invention is charged in a mold of a predetermined shape before hardening depending on the use of molded products. After being molded into predetermined shapes according to various molding methods, the molded precursor material is subjected to carbonization and sintering in an inert atmosphere at a temperature of 800°C or higher, preferably 1000°C or higher and more preferably 1200°C or higher to obtain the desired molded products made from the glasslike carbon material. The time required for carbonization and sintering can be conveniently determined depending on the sintering temperature employed. When the heating temperature is below 800°C, the resin will not be sufficiently carbonized, resulting in a higher pore ratio making it difficult to impart the required physical and performance properties to the glasslike carbon material.

As described above, the use of a thermosetting resin as the starting material which is capable of containing at least 20 wt.% of water in an initial condensate stage enables one to proceed with hardening while these substances also present with lower boiling points are thoroughly dispersed and dissolved in the base resin. This is extremely advantageous in obtaining a glasslike carbon material which is substantially free from pores and of manufacturing problems in practical use.

Particularly since the resulting glasslike carbon material does not have pores in its inside structure, the process according to the present invention can be used for manufacturing an extremely thin film manufacturing substrate by vapor deposition of thin film or sputtering deposition. Its specular surface property allows for a process for manufacturing a thin film supporting body used as a magnetic head substrate or a head slider. The material may also be used as sliding members having good resistance against wear which are useful for regular precise electronic parts. The invention also includes a method for manufacturing an electronic material in view of the prevailing tendency of higher integration and higher density. Furthermore, the glasslike carbon material obtained according to the process of the present invention can also be used as a fuel battery separator.


Brief description of the drawings

Figure 1 illustrates a perspective view of a model substrate for a magnetic head made of the material according to the present invention,

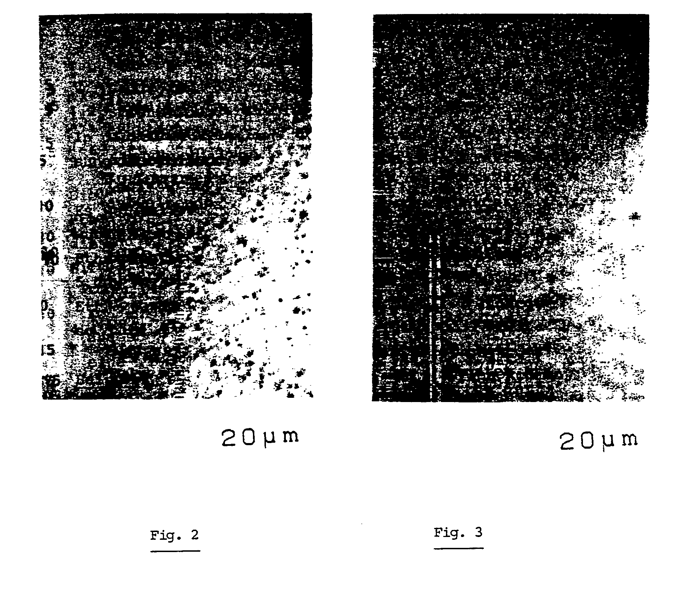

Figure 2 is a photograph of a ground surface of a conventional glasslike carbon material by a scanning electron micrograph.

Figure 3 is a photograph of a ground surface of a glasslike carbon material according to the invention by a scanning electron micrograph.


Description of the preferred embodiments

The present invention will be more clearly understood with reference to the following examples. However, it is to be understood that the invention is by no means to be limited to the specific examples. The term "part" or "parts" as used hereinafter in the examples mean part or parts by weight unless otherwise specified.

Example I

500 parts of furfuryl alcohol and 480 parts of 92% paraformaldehyde were agitated to dissolve at 80°C and added dropwise with a liquid mixture containing 520 parts phenol, 8.8 parts sodium hydroxide and 45 parts water under agitation. After the addition, the mixture was reacted for 3 hours at 80°C. A mixed solution containing 80 parts phenol, 8.8 parts sodium hydroxide and 45 parts water was further added and reacted for 4.5 hours at 80°C. after cooling to 30°C, the reaction system was neutralized with 70% paratoluensulfonic acid. After dehydrating the neutralized substance under reduced pressure to remove 150 parts water, 500 parts furfuryl alcohol were added. The obtained resin had the viscosity of 680 $10^{-3}$ P · s at 25°C. The capacity of the resin to hold water was measured to be 38%.

To the resin composition there was added 3.5 parts of liquid solution of hardening agent containing paratoluensulfonic acid, water and glycol (weight ratio 7:2:1). The solution was agitated for 10 minutes and charged into a 3 mm$^2$ thick rectangular mold and defoamed under reduced pressure. It was heated for 3 hours at a temperature between 50 and 60°C and further at 90°C for two days. A plate of hardened resin thus obtained was introduced into a tubular furnace, heated to 1200°C at a rate of 10°C/hr under a nitrogen stream, maintained at said temperature for 2 hours, and cooled to obtain a glasslike carbon material.

The glasslike carbon material was ground with an abrasive paper of No. 500—No. 8000 and the surface pore structure and the pore diameter of the ground material were observed by a scanning electron microscope. The broken surface evidently had a glasslike structure. The pore diameter war. in the range of from 0.05 to 0.01 μm or less.

Example II

100 parts lignin (manufactured by Borregaard A.S. under the commercial name Ultragine NA), 100 parts 37% formalin, 100 parts furfuryl alcohol and 10 parts benzoic acid were mixed and reacted for 6 hours at 100°C. The resulting resin had a viscosity of 820 $10^{-3}$ P · s and was soluble in water. A glasslike carbon material was obtained in the same manner as in Example I by hardening and carbonization. The surface pore structure of the inner surface was observed. The broken surface had a glasslike structure and the pore diameter was from 0.05 to 0.01 μm or less.

Example III

A mixture of modified furan resins according to Examples I and II in the ratio of 1:1 was prepared before the resins hardened. The viscosity of the mixture was 750. Hardening and carbonization identical to those of Example II were conducted to obtain glasslike carbon material. The surface pore structure of the inner surface was observed. The broken surface had glasslike structure and the pore diameter was from 0.02 to 0.01 μm or less.

The following comparative examples are not according to the invention.

Comparative Example I

5 parts of an aqueous solution of 0.011 n-HCl were added to 100 parts furfuryl alcohol and the mixture was reacted for 6 hours at 100°C then dehydrated under reduced pressure. The initial condensate of furfuryl alcohol thus obtained had a water content of 0.63% and a viscosity of 390 $10^{-3}$ P · s. The capacity of the resin to hold water was found to be approximately 4%. A glasslike carbon material was obtained in the same manner as in Example I by hardening and carbonization. The surface pore structure of the inner surface was observed. The broken surface had glasslike structure, but numerous pores about 0.5 μm in diameter were found.

Comparative Example II

A reaction system comprising 100 parts furfuryl alcohol, 25 parts 85% paraformaldehyde added with 10 parts benzoic acid and 0.1 part 93% NaOH was reacted for 11 hours at 110°C. The resin obtained had a viscosity of 350. The capacity of the resin to hold water was found only to be 15%. A glasslike carbon material was obtained in the same manner as in Example I by hardening and carbonization. The surface pore structure of the ground inner surface was observed. The broken surface had glasslike structure, but numerous pores greater than 1.0 μm in diameter were found.

Example IV

A mixture of 500 parts of furfuryl alcohol, 480 parts of 92% paraformaldehyde and 50 parts ion exchanged water was heated to 80°C under agitation and added dropwise with a liquid mixture containing 520 parts phenol, 8.8 parts sodium hydroxide and 45 parts water. During the addition, the temperature was maintained at 80°C. After the addition, the mixture was agitated for 3 hours to mature and added dropwise with a mixture of 80 parts phenol, 45 parts water and 8.8 parts sodium hydroxide. After the addition, it was reacted for 2 hours at 80°C. After cooling to 70°C, it was further added dropwise with 63 parts melamine and 160 parts of a 37% formaldehyde liquid solution, and reacted for 5 hours at 70°C. Then the liquid was cooled to room temperature and neutralized with 70% paratoluensulfonic acid. After dehydrating the neutralized substance under reduced pressure to remove 250 parts water, 500 parts furfuryl alcohol was added. The obtained resin had the viscosity of 2700 $10^{-3}$ P · s at 25°C. The capacity of the resin to hold water was measured to be at least 35%.

6

The resin was added with 4.5 parts of liquid solution of hardening agent containing paratoluensulfonic acid, water and glycol (weight ratio 7:2:1), agitated sufficiently, charged into a 3 mm² thick rectangular mold and defoamed under reduced pressure. It was heated for 3 hours at a temperature between 50 and 60°C and further at 90°C for seven days. A plate of hardened resin thus obtained was introduced into a tubular furnace, heated to 1200°C at a rate of 10°C/hr under a nitrogen stream, maintained at said temperature for 2 hours, then cooled to obtain a glasslike carbon material.

The glasslike carbon material was ground with an abrasive paper of No. 500—No. 8000 and the surface pore structure of the inner surface and the pore diameter of the ground material were observed by a scanning electron microscope. The ground surface did have pores but only a few per 1 mm². The pore diameter was in the range from 0.1 to 0.5 μm. No pores greater in diameter than the above were observed.

Example V

500 parts furfuryl alcohol and 480 parts of 92% paraformaldehyde were agitated to dissolve at 80°C and added dropwise with a liquid mixture containing 520 parts phenol, 8.8 parts sodium hydroxide and 45 parts water under agitation. After the addition, the mixture was reacted for 3 hours at 80°C and added further with a mixed solution containing 80 parts phenol, 8.8 parts sodium hydroxide and 45 parts water. The resultant was reacted for 4.5 hours. After cooling to room temperature with water, the reaction was neutralized and then mildly acidified (pH 7.5) with 70% paratoluenesulfonic acid. The solution was heated to 80°C again and added dropwise with 135 parts of a 37% formalin liquid solution and 100 parts of a 50% urea liquid solution. After maturing for 1 hour, it was dehydrated under reduced pressure to remove approximately 250 parts water and added with 500 parts furfuryl alcohol.

The obtained resin had the viscosity of 2200 $10^{-3}$ P · s at 25°C. The water content capable of being held was measured to be at least 30%.

The resin composition thus obtained was hardened and carbonized in the same manner as in Example I to obtain a glasslike material. The surface pore structure of the inner surface was observed in the same manner as in Example I. The ground surface had a glasslike structure.

There were less than 10 pores in the range from 0.1 μm to 0.5 μm in diameter per 1 mm². No pores greater in diameter than the above were found.

Example VI

100 parts phenol were added with 157 parts of a 37% liquid solution of formaldehyde and 15 parts lignin under agitation, and added further with 5 parts of a 10% hydroxide liquid solution under agitation. The mixture was heated to 80°C and reacted for 2 hours at said temperature. Thereafter, the solution was cooled to 70°C, added with 9 parts melamine and 25 parts of a 37% liquid solution of formaldehdye and reacted, again maintaining the temperature at 70°C. After cooling to room temperature, the solution was neutralized and then mildly acidified with 85% lactic acid. The resultant is dehydrated under reduced pressure to remove 120 parts water. The obtained resin composition had a viscosity of 4800 $10^{-3}$ P · s at 25°C. The water content of the resin capable of being held was measured to be at least 30%.

The resin composition was added with 4.5 parts of a liquid solution of hardening agent containing paratoluensulfonic acid, water and glycol (weight ratio 7:2:1), agitated sufficiently, charged into a 3 mm² thick rectangular mold and defoamed under reduced pressure. Then it was heated for 3 hours at a temperature of between 50°C and 60°C and further heated at 90°C for two days. A plate of hardened resin thus obtained was introduced into a tubular furnace, heated to 1200°C at rate of 10°C/hr under a nitrogen stream, maintained at said temperature for 2 hours, and cooled to obtain a glasslike carbon material.

The glasslike carbon material was ground with an abrasive paper of No. 500—No. 8000 and the surface pore structure of the inside surface and the pore diameter of the ground material were observed by a scanning electron microscope. There were only a few pores on the ground surface per 1 mm². The pore diameter was in the range of from 0.1 μm to 0.5 μm. No pores greater in diameter than the above were found.

Example VII

A mixture of 500 parts of furfuryl alcohol (manufactured by Kao-Quaker) and 483 parts of 80% paraformaldehyde (manufactured by Wako Junyaku) and 305 parts of lignin (manufactured by Borregaad A. S. under the commercial name Ultragine NA) were heated to 80°C under agitation and added dropwise with a liquid mixture containing 524 parts carbolic acid (manufactured by Mitsui Toatsu K.K.), 54 parts of a 16% aqueous solution of sodium hydroxide under agitation. After the addition, the mixture was allowed to mature for 3 hours at 80°C. A mixed solution containing 81 parts carbolic acid and 54 parts of 16% sodium hydroxide was further added and matured for 2 hours at 80°C. After cooling to room temperature, the reaction system was subjected to neutralization or mold acidification (pH 7.5) with 70% paratoluensulfonic acid. The liquid was heated to 80°C again and added with 120 parts of a 37% liquid solution of formalin and 90 parts of a 50% liquid solution of urea. After being matured for 1 hour, it was dehydrated under reduced pressure to remove 290 parts water and 500 parts furfuryl alcohol were added. The obtained resin had a viscosity of 2900 $10^{-3}$ P · s at 25°C. The water content of the resin capable of being held was measured to be at least 35%.

A glasslike carbon material was obtained in the same manner as in Example I by hardening and carbonizing the resin.

The surface pore structure of the inner surface and the pore diameter of the ground material were observed in the same manner as in Example I. The ground surface had glasslike structure. There were fewer than 10 pores per 1 mm². The pore diameter was in the range of from 0.1 μm to 0.5 μm. No pores greater in diameter than the above were observed.

Example VIII

A mixture of 500 parts furfuryl alcohol, 483 parts of 80% paraformaldehyde and 200 parts of lignin was heated to 80°C. Then, the mixture was added dropwise with a mixture of 524 parts carbolic acid and 54 parts of 16% sodium hydroxide liquid solution under agitation at 80°C. After dropping it was allowed to mature for 3 hours at 80°C. Next, 81 parts of carbolic acid and 54 parts of sodium hydroxide liquid solution were added dropwise and matured for 2 hours while maintaining said temperature. Thereafter, the liquid temperature was lowered to 70°C and 63 parts of melamine and 160 parts of 37% formaldehyde liquid solution were added. After reacting for 5 hours at a temperature of 70°C, the solution was cooled to room temperature. The solution was neutralized with a 70% liquid solution of paratoluensulfonic acid, dehydrated under reduced pressure to remove 250 parts water and 500 parts of furfuryl alcohol were added.

The obtained resin had a viscosity of 3800 $10^{-3}$ P · s at 25°C. The water content capable of being held was measured to be at least 35%.

A glasslike carbon material was obtained in the same manner as in Example I by hardening and carbonizing of the resin. The surface pore structure of the inside ground surface of the glasslike material was observed in the same manner as in Example I. The ground surface had a glasslike structure. There were fewer than 10 pores per 1 mm², and the pore diameter was found to be in the range of from 0.1 μm to 0.5 μm. No pores greater in diameter than the above were observed.

Example IX

A mixture of 500 parts furfuryl alcohol (manufactured by Kao-Quaker), 483 parts of 80% paraformaldehyde (manufactured by Wako Junuaku) and 305 parts lignin (manufactured by Borregaad A. S. under the commercial name Ultragine NA) was heated to 80°C under agitation. The mixture was added dropwise with a mixed liquid solution containing 524 parts carbolic acid (manufactured by Mitsui Toatsu K.K.) and 54 parts of a 16% liquid solution of sodium hydroxide under agitation. The temperature was maintained at 80°C during the reaction. After dropping, the reactant was matured for 3 hours while being maintained at a temperature of 80°C. Thereafter, it was added dropwise with a mixed liquid solution of 81 parts carbolic acid and 54 parts of a 16% liquid solution of sodium hydroxide and allowed to mature for 2 hours at a temperature of 80°C. The solution was cooled to room temperature and neutralized with 70% paratoluensulfonic acid. Then it was dehydrated under reduced pressure to remove 150 parts water, and added with 480 parts furfuryl alcohol. The obtained resin composition had a viscosity of 6500 $10^{-3}$ P · s at 25°C and the water content capable of being held was 41%.

The obtained resin composition was added with 4.5 parts of a liquid solution of a hardening agent containing paratoluensulfonic acid, water and glycol (weight ratio 7:2:1), agitated sufficiently and charged in a rectangular mold 3 mm² in thickness and defoamed under reduced pressure. Thereafter, it was heated for 3 hours at a temperature in the range of from 50°C to 60°C and maintained heated for 10 days at 90°C. The obtained rectangular shaped hardened resin was introduced into a tubular furnace and heated to 1200°C at a rate of 10°C/hr under a nitrogen stream. After maintaining said temperature for 2 hours, it was cooled for obtaining a glasslike material.

The obtained glasslike carbon material was ground with an abrasive paper of No. 500—No. 8000 and the surface pore structure of the inside ground surface and the pore diameter of the ground material were observed by a scanning electron microscope. There were only a few pores per 1 mm² on the ground surface. The pore diameter was in the range of from 0.1 μm to 0.5 μm. No pores greater in diameter than the above were observed.

Example X

100 parts carbolic acid was added with 157 parts of a 37% liquid solution of formaldehyde with 20 parts of lignin, and added further with 5 parts of 10% liquid solution of sodium hydroxide. The mixed solution was reacted under agitation for 2 hours at 80°C. After it was cooled to room temperature, it was neutralized with 5.5 parts of 85% lactic acid and dehydrated to remove 120 parts water under reduced pressure.

The obtained resin composition had a viscosity of 3200 $10^{-3}$ P · s at 25°C.

A glasslike carbon material was obtained by hardening and carbonization as in Example II. The surface pore structure of the inside ground surface of the glasslike carbon material was observed as in Example II. The ground surface had glasslike structure. There were fewer than 10 pores thereon per 1 mm². The pore diameter was in the range of 0.1 μm to 0.5 μm. No pores greater in diameter than the above were observed.

Example XI

30 parts lignin, 100 parts of 37% formalin, 100 parts furfuryl alcohol and 10 parts benzoic acid were mixed together and reacted for 6 hours at 100°C. The obtained resin composition had a viscosity of 520 and the water content capable of being held was at least 30%.

A glasslike carbon material was obtained by hardening and carbonizing of the resin as in Example I. The surface pore structure of the inside ground surface of the resin were observed as in Example I. The ground surface has a glasslike structure. There were fewer than 20 pores thereon per 1 mm². The pore diameter was in the range of from 0.1 μm to 0.5 μm. No pores greater in diameter than the above were observed.

Comparative Example III

100 parts furfuryl alcohol were added with 5 parts of a liquid solution of 0.01 n-HCl and the mixture was reacted for 6 hours at 100°C and dehydrated under reduced pressure. The initial condensate of furfuryl alcohol thus obtained had a water content of only 0.63% and a viscosity of 390 $10^{-3}$ P·s. The maximum water content thereof was measured to be about 4%.

A glasslike carbon material was obtained in the same manner as in Example I by hardening and carbonization. The surface pore structure of the inner ground surface was observed as in Example I. The ground surface had glasslike structure. However, there were from $10^3$ to $10^4$ pores sections about 0.5 μm in diameter.

Comparative Example IV

A mixture of 10 parts furfuryl alcohol and 25 parts of 85% paraformaldehyde was added to 10 parts benzoic acid and 0.1 parts 93% sodium hydroxide; the mixture was reacted for 11 hours at 110°C. The obtained resin had the viscosity of 350 cps. The maximum water content thereof was measured to be about 15%.

A glasslike carbon material was obtained as in Example I by hardening and carbonization. The surface pore structure of the inside ground surface thereof was observed as in Example I. The ground surface had glasslike structure but numerous pores about 0.1 μm or more in diameter were observed.

Example XII

500 parts furfuryl alcohol and 480 parts of 92% paraformaldehyde were agitated and reacted at 80°C. The mixture was added dropwise with a liquid mixture containing 520 parts phenol, 8.8 parts sodium hydroxide and 45 parts water under agitation. After dropping, it was reacted for three hours at 80°C. It was further added with a solution mixture of 80 parts phenol, 8.8 parts sodium hydroxide and 45 parts water and reacted for 4.5 hours at 80°C. The solution mixture was cooled to 30°C and neutralized with 70% paratoluensulfonic acid. Thereafter, it is dehydrated under reduced pressure to remove 150 parts water and 500 parts furfuryl alcohol were added.

The resin composition thus obtained was a composition consisting of phenol (PhOH), furfuryl alcohol (FFA) and formalin (F) in the mole ratio of 22:32:46 after being converted to monomer. The resin had the viscosity of 680 $10^{-3}$ P·s at 25°C and the water content thereof was 38%.

Composition, viscosity and water content of the resin composition are shown in Table 1.

The resin composition thus obtained was added with 3.5 parts of a liquid solution of hardening agent containing paratoluensulfonic acid, water and glycol (weight ratio 7:2:1). After being sufficiently agitated, the mixture was charged into a 3 mm² thick rectangular mold and defoamed under reduced pressure. Thereafter, the resin was heated for 3 hours at a temperature in a range of from 50 to 60°C and further heated for two days at 90°C. The obtained rectangular shaped hardened resin was introduced into a tubular furnace and heated to 1200°C at a rate of 10°C/hr under a nitrogen stream and maintained for 2 hours. Thereafter, it was cooled to obtain a glasslike carbon material.

The glasslike carbon material was ground with an abrasive sheet No. 500—No. 8000 and the surface pore structure of the ground inside surface and the pore diameter were observed by a scanning electron microscope. The ground surface had an apparently glasslike structure, and the pore diameter was in the range of from 0.05 μm to 0.01 μm or less.

Example XIII

500 parts furfuryl alcohol (manufactured by Kao-Quaker) and 483 parts of 92% paraformaldehyde (manufactured by Mitsui Toatsu K.K.) were put into a four-neck flask and heated to 80°C under agitation The mixture was added dropwise with a mixture of 525 parts carbolic acid (manufactured by Mitsui Toatsu K.K.) and 54 parts of a 16.5% liquid solution of sodium hydroxide for 6 hours at 80°C. During the reaction under dropping, the paraformaldehyde was sublimed but the mixture was kept agitated and dissolved. After dropping, it was further reacted for 3 hours. Thereafter, a solution consisting of a mixture of 80.5 parts phenol and 54 parts of 16.5% sodium hydroxide were added dropwise under agitation. After reacting it was matured for 2 hours at 80°C, it was cooled to room temperature and then neutralized with 50.8 parts of a 70% liquid solution of paratoluensulfonic acid. Then it was dehydrated to remove about 150 parts water under reduced pressure and 400 parts furfuryl alcohol were added.

The resin composition thus obtained was a composition consisting of phenol, furfuryl alcohol and formalin in the mole ratio of 20:29.5:50.5 after being converted to monomer. The resin had a viscosity of 1750 $10^{-3}$ P·s at 25°C and the water content thereof was 31%.

A glasslike carbon material was obtained as in Example I by hardening and carbonizing said resin. The surface pore structure of the inside ground surface was observed as in Example I. The ground surface had a glasslike structure. There were fewer than 10 pores thereon per 1 mm$^2$. The pore diameter was in the range of from 0.1 µm to 0.5 µm; no pores greater in diameter than the above were observed.

Example XIV

Phenol and furfuryl alcohol were cocondensed in the mole ratio of 32:32:36 after being converted to monomer.

The obtained resin composition has a viscosity of 1600 10$^{-3}$ P · s at 25°C and was capable of holding 30% water.

A glasslike carbon material was obtained as in Example I by hardening and carbonizing said resin. The surface pore structure of the inside ground surface was observed as in Example I. The ground surface had a glasslike structure. There were fewer than 10 pores thereon per 1 mm$^2$. The pore diameter was in the range of from 0.1 µm to 0.5 µm; no pores greater in diameter than the above were observed.

Example XV

Phenol, furfuryl alcohol and formalin were co-condensed in the mole ratio of 24:20:55 after being converted to monomer.

The obtained resin composition had a viscosity of 4250 at 25°C and the water content there was 35%.

A glasslike carbon material was obtained as in Example I by hardening and carbonizing said resin. The surface pore structure of the inside ground surface was observed as in Example I. The ground surface had a glasslike structure. There were fewer than 10 pores thereon per 1 mm$^2$. The pore diameter was in the range of from 0.1 µm to 0.5 µm; no pores greater in diameter than the above were observed.

Example XVI

Phenol furfuryl alcohol and formalin were co-condensed in the mole ratio of 29:26:45.

The obtained resin composition had a viscosity of 1800 10$^{-3}$ P · s at 25°C and the water content there was 30%.

A glasslike carbon material was obtained as in Example I by hardening and carbonizing said resin. The surface pore structure of the inside ground surface was observed as in Example I. The ground surface had a glasslike structure. There were fewer than 10 pores thereon per 1 mm$^2$. The pore diameter was in the range of from 0.1 µm to 0.5 µm; no pores greater in diameter than the above were observed.

Example XVII

Phenol, furfuryl alcohol and formalin were co-condensed in the mole ratio of 25.5:36.5:38.

The obtained resin composition had a viscosity of 320 at 25°C and the water content there was 35%.

A glasslike carbon material was obtained as in Example I by hardening and carbonizing said resin. The surface pore structure of the inside ground surface was observed as in Example I. The ground surface had a glasslike structure. There were fewer than 10 pores thereon per 1 mm$^2$; no pores greater in diameter than the above were observed.

Comparative Example V

Phenol, furfuryl alcohol and formalin were co-condensed in the mole ratio of 19:41:40.

The obtained co-condensate had a viscosity of 420 10$^{-3}$ P · s at 25°C and the water content thereof was 26%.

A glasslike carbon material was obtained as in Example I by hardening and carbonizing said co-condensate. The surface pore structure of the inside ground surface was observed as in Example I. There were about 20 pores thereon per 1 mm$^2$. The pore diameter was in the range of from 0.1 µm to 0.5 µm.

Comparative Example VI

Phenol, furfuryl alcohol and formalin were co-condensed in the mole ratio of 50:15:35. The obtained co-condensate had the viscosity of 2700 at 25°C, and the water content thereof was 18%.

A glasslike carbon material was obtained as in Example I by hardening and carbonizing said co-condensate. The surface pore structure of the inside ground surface was observed as in Example I. There were about 10$^3$ pores thereon per 1 mm$^2$. The pore diameter was in the range of from 0.1 µm to 0.5 µm. There were also large pores of 0.5 µm or more in diameter.

Comparative Example VII

Phenol and formalin was co-condensed in the mole ratio of 30:70 after being converted to monomer. The obtained co-condensate had a viscosity of 3200 at 25°C., and the water content thereof was 19%.

A glasslike carbon material was obtained as in Example I by hardening and carbonizing said co-condensate The surface pore structure of the inside ground surface was observed as in Example I. Numerous pores about 1 µm in diameter or more were found.

### Comparative Example VIII

Furfuryl alcohol and formalin were co-condensed in the mole ratio of 59:41 after being converted to monomer. The obtained co-condensate had a viscosity of 350 $10^{-3}$ P · s and the water content thereof was 15%.

A glasslike carbon material was obtained as in Example I by hardening and carbonizing said co-condensate. The surface pore structure of the inside ground surface was observed as in Example I. Numerous pores of about 1 μm or more in diameter were found.

### Comparative Example IX

Furfuryl alcohol by itself was condensed; the resin has a viscosity of 390 at 25°C and the water content thereof was 4%.

A glasslike carbon material was obtained as in Example I by hardening and carbonizing said resin. The surface pore structure of the inside ground surface was observed as in Example I. Numerous pores about 1 μm or more in diameter were found.

### TABLE 1

| | | Composition* (mole ratio) | | | Vis-cosity $10^{-3}$ P · s | Water content % |
|---|---|---|---|---|---|---|
| | | PhOH | FFA | F | | |
| Example | 12 | 22 | 32 | 46 | 680 | 38 |
| | 13 | 20 | 29.5 | 50.5 | 1750 | 31 |
| | 14 | 32 | 32 | 36 | 1600 | 36 |
| | 15 | 25 | 30 | 55 | 4250 | 35 |
| | 16 | 29 | 26 | 45 | 1800 | 30 |
| | 17 | 25.5 | 36.5 | 38 | 320 | 36 |
| Comparative Example | 5 | 19 | 41 | 40 | 420 | 26 |
| | 6 | 50 | 15 | 35 | 2700 | 18 |
| | 7 | 30 | 0 | 70 | 3200 | 19 |
| | 8 | 0 | 59 | 41 | 350 | 15 |
| | 9 | 0 | 100 | 0 | 390 | 4 |

*PhOH=phenol
FFA=furfuryl alcohol
F=formalin

### Comparative Example X

The maximum water content of HITA furan VF302 (furfuryl alcohol/furfuryl condensate, viscosity of 200 cps at 25°C) was obtained as follows: after being vigorously mixed with about an equal quantity of water, it was left as it was and precipitated resin produced on the bottom was taken out for sampling. The water content was measured by the Karl-Fischer technique and was found to be 3.9%.

A glasslike carbon material was obtained as in Example I by hardening and carbonizing. The surface pore structure of the inside ground surface was observed as in Example I. There were about $10^2$ to $10^5$ pores thereon per 1 mm². The pore diameter was in the range of from 0.1 μm to 3 μm. An acceptable sputtering film could not be obtained on this substrate because of its poor adherence; the film was exfoliated when it was annealed.

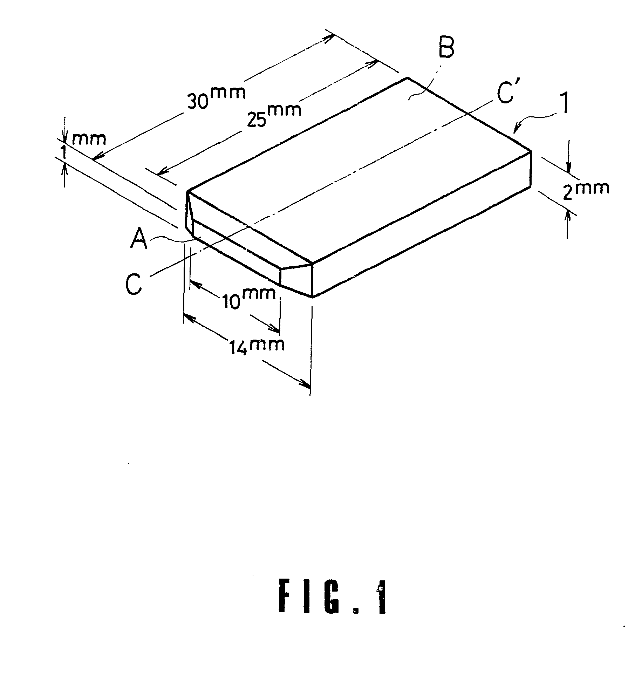

The glasslike carbon material obtained as in Example I & II and Comparative Example I & II was cut into the shape and size as shown in Figure 1. The object was to prepare a model substrate 1 by gradually grinding its surface A to be slid against a recording medium while surface B was provided with a thin film from coarse to fine finish for a specular surface using an abrasive paper #15000. Observation of the surface B with the specular finish as in Example I using a scanning electron microscope indicated that there were no pores greater than 0.5 μm in diameter; those pores found were less than 0.01 μm in diameter.

In order to evaluate the friction property of the model substrate 1 with a magnetic recording medium, the dynamic friction property of the surface A of the substrate 1 with a co-deposited -Fe O coated film, with Ni-P plated thin film and with a Co-Cr sputtering thin film was measured using a friction test apparatus. The surface A (sliding surface) of the substrate 1 and the film surface of the magnetic recording medium were observed visually. The results are shown in Table 2. The friction test apparatus used in the measurement is suitable for measuring dynamic friction properties of an object under conditions simulating actual use and is described in the Japanese Patent Application Disclosure 55-128142, the disclosure of which is hereby incorporated by reference.

# EP 0 121 781 B1

TABLE 2

| Model substrate | Film of recording medium | Coefficient of dynamic friction | Sliding surface of substrate | Film surface |
|---|---|---|---|---|
| Example I | Coγ-Fe₂O₃ film | 0.16 | good | good |
| | Ni-P plated film | 0.11 | good | good |
| | Co-Cr sputtering film | 0.11 | good | good |
| Example II | Coγ-Fe₂O₃ film | 0.15 | good | good |
| | Ni-P plated film | 0.10 | good | good |
| | Co-Cr sputtering film | 0.10 | good | good |
| Comp. Example I | Coγ-Fe₂O₃ film | 0.25 | good | film exfoliated |
| | Ni-P plated film | 0.25 | good | film exfoliated |
| | Co-Cr sputtering film | 0.25 | good | film exfoliated |
| Comp. Example II | Coγ-Fe₂O₃ film | 0.28 | good | film exfoliated |
| | Ni-P plated film | 0.26 | good | film exfoliated |
| | Co-Cr sputtering film | 0.26 | good | film exfoliated |

Test Example II

The glasslike carbon material obtained in Examples I to XI and Comparative Examples I to IV was cut into the shape and size as shown in Figure 1 to prepare a model substrate 1 by gradually grinding of surface A to be held in sliding contact with a recording medium. Surface B was provided with a thin film from coarse to fine finish for a specular surface using an abrasive paper No. 1500. Observation of the surface B with the specular finish as in Examples IV, VI & IX using a scanning electron microscope indicated that there were no pores greater than 0.5 μm in diameter and that the pores found were less than 0.01 μm in diameter.

The model substrate 1 was sectioned along the line C—C' shown in the Figure 1. The surface B of one of the sections was provided with a thin film 1 μm in thickness of Co-Zr-Nb alloy by sputtering. Surface B of the other section was provided with a thin film 0.3 μm in thickness of Co-Zr-Nb alloy by sputtering. These thin films were heated in a revolving magnetic field. After heating the coercive force (Hc) of the respective thin films was measured using a vibration-type magnetic measurement apparatus for soft magnetic thin films. The results are shown in Table 3.

An attempt was made to test the glasslike carbon material obtained in the Comparative Examples reported above. However, the target head could not be obtained as the sputtered film exfoliated during heating.

TABLE 3

Magnetic cohesion of film*

| Model substrate | Film thickness 1.0 µm | Film thickness 0.3 µm | Magnetic characteristics |
|---|---|---|---|
| Example I | 0.08 | 0.2 | good |
| Example II | 0.08 | 0.3 | good |
| Comp.** Example I | not measurable | not measurable | inferior |
| Comp. Example II | not measurable | not measurable | inferior |
| Example IV | 0.08 | 0.2 | good |
| Example V | 0.08 | 0.3 | good |
| Example VI | 0.08 | 0.2 | good |
| Example VII | 0.08 | 0.3 | good |
| Example VIII | 0.08 | 0.2 | good |
| Example IX | 0.08 | 0.2 | good |
| Example X | 0.08 | 0.3 | good |
| Example XI | 0.08 | 0.3 | good |
| Comp. Example III | not measurable | not measurable | inferior |
| Comp. Example IV | not measurable | not measurable | inferior |

* Unit: OE
** Comparative Example

Test Example III

The glasslike carbon material obtained in Examples XII to XVII and Comparative Examples V to IX was cut into the shape and size as shown in Figure 1 to prepare a model substrate 1 by gradually grinding its surface A to be held in sliding contact with a recording medium. Surface B to be provided with a thin film from coarse to fine finish for a specular surface using an abrasive paper #1500. Observation of the surface B with specular finish as in Example XII using a scanning electron microscope indicated that there were no pores greater than 0.5 µm in diameter and that the pores founded were less than 0.01 µm in diameter.

The model substrate 1 was sectioned along the line C—C' as in Figure 1. Surface B of one of the sections was provided with a thin film of 1 µm in thickness of a Co-Zr-Nb alloy by sputtering. Surface B of the other section was provided with a thin film of 0.3 µm in thickness of a Co-Zr-Nb alloy by sputtering. These thin films were heated in a revolving magnetic field. After heating, the coercive force (Hc) of respective thin films was measured using a vibration-type magnetic measurement apparatus for soft magnetic films. Those films which have good magnetic characteristics show a smooth H—B curve, whole those which have inferior magnetic characteristics show a line of discontinuity having stepping H—B curve. The status of the sputtered film and an evaluation of the magnetic characteristics are shown in Table 4.

TABLE 4

| | Sputtered film | Magnetic characteristics |
|---|---|---|
| Example XII | good | good |
| Example XIII | good | good |
| Example XIV | good | good |
| Example XV | good | good |
| Example XVI | good | good |
| Example XVII | good | good |
| *Com. Example V | fair | good |
| Com. Example VI | inferior | inferior |
| Com. Example VII | inferior | inferior |
| Com. Example VIII | inferior | inferior |
| Com. Example IX | inferior | inferior |

*Comparative examples

Discussion of the test results: As is clear from Tables 2 to 4, the characteristics of the glasslike carbon materials according to the present invention show smaller magnetic cohesion and excellent magnetic characteristics compared with those obtained in accordance with the methods of the comparative examples.

**Claims**

1. A process for manufacturing a glasslike carbon material comprising carbonizing and sintering in an inert atmosphere at a temperature of at least 800°C a thermosetting resin, characterized in that an initial condensate of a thermosetting resin is used which is capable of containing at least 20% by weight of water when said resin is in the state of an initial condensate before hardening and producing a glasslike carbon material.

2. The process according to Claim 1, characterized in that the thermosetting resin is a resin composition having a viscosity of from 100 to 8000 $10^{-3}$ P·s at 25°C comprising:

(a) from 70 to 100 parts by weight of at least one member selected from the group consisting of a mixture of formaldehyde with phenol resin, furan resin or phenol modified furan co-condensate; and

(b) from 0 to 30 parts by weight of at least one member selected from the group consisting of a mixture of formaldehyde with one or both, urea resin and melamine resin.

3. The process according to Claim 2, characterized in that part (a) contains phenol and formaldehyde in the mole ratio of from 1:3 to 1:0.5.

4. The process according to Claim 2, characterized in that part (a) contains furfuryl alcohol and formaldehyde in the mole ratio of from 1:1 to 1:0.

5. The process according to Claim 2, characterized in that part (a) contains one or both phenol, furfuryl alcohol, and formaldehyde in the mole ratio of from 30:55 to 75:30.

6. The process according to one of the Claims 2 to 5, characterized in that part (b) contains urea and formaldehyde in the mole ratio of from 1:2 to 1:0.5.

7. The process according to one of the Claims 2 to 5, characterized in that part (b) contains melamine and formaldehyde in the mole ratio of from 1:6 to 1:0.5.

8. The process according to one of the Claims 2 to 5, characterized in that part (b) contains one or both urea, melamine, and formaldehyde in the mole ratio of from 30:55 to 75:30.

9. The process according to Claim 1, characterized in that said thermosetting resin is a resin composition obtained by co-condensing from 15 to 40 of phenol, from 15 to 35 of furfuryl alcohol and from 30 to 55 of formaldehyde based on the mole ratio converted to monomer.

10. The process according to Claim 1, characterized in that said thermosetting resin is a resin composition having a viscosity of from 100 to 8000 $10^{-3}$ P·s at 25°C comprising:

(a) from 70 to 100 parts by weight of at least one member selected from the group consisting of a mixture of formaldehyde with phenol resin, furan resin or phenol modified furan co-condensate;

EP 0 121 781 B1

(b) from 0 to 15 parts by weight of at least one member selected from the group consisting of lignin, modified resin and modified cellulose; and

(c) from 0 to 15 parts by weight of at least one member selected from the group consisting of a mixture of formaldehyde with one or both urea resin and melamine resin.

11. The process according to Claim 10, characterized in that part (a) contains phenol and formaldehyde in the mole ratio of from 1:3.5 to 1:0.5.

12. The process according to Claim 10, characterized in that part (a) contains furfuryl alcohol and formaldehyde in the mole ratio of from 1:1.2 to 1.0.

13. The process according to Claim 10, characterized in that part (a) contains one or both phenol, furfuryl alcohol, and formaldehyde in the mole ratio of from 30:55 to 75:30.

14. The process according to one of the Claims 10 to 13, characterized in that part (c) contains urea and formaldehyde in the mole ratio of from 1:2 to 1:0.5.

15. The process according to one of the Claims 10 to 13, characterized in that part (c) contains melamine and formaldehyde in the mole ratio of 1:6 to 1:0.5.

16. The process according to one of the Claims 10 to 13, characterized in that part (c) contains urea, melamine, and formaldehyde in the mole ratio of from 30:55 to 75:30.

17. The process according to Claim 1, characterized in that said thermosetting resin is a resin composition having a viscosity of from 100 to 8000 $10^{-3}$ P $\cdot$ s at 25°C comprising:

(a) from 70 to 100 parts by weight of at least one member selected from the group consisting of a mixture of formaldehyde with phenol resin, furan resin or phenol modified furan co-condensate; and

(b) from 0 to 30 parts by weight of at least one member selected from the group consisting of lignin, modified resin and modified cellulose.

18. The process according to Claim 17, characterized in that part (a) contains phenol and formaldehyde in the mole ratio of from 1:4 to 1:0.5.

19. The process according to Claim 17, characterized in that part (a) contains furfuryl alcohol and formaldehyde in the mole ratio of from 1:1.3 to 1:0.

20. The process according to Claim 17, characterized in that part (a) includes one or both phenol, furfuryl alcohol, and formaldehyde in the mole ratio of from 1:4 to 1:0.

## Patentansprüche

1. Verfahren zum Herstellen eines glasartigen Kohlenstoffmaterials, umfassend ein Karbonisieren und Sintern eines hitzehärtbaren Harzes in einer inerten Atmosphäre bei einer Temperatur von wenigstens 800°C, dadurch gekennzeichnet, daß ein Anfangskondensat eines hitzehärtbaren Harzes verwendet wird, das in der Lage ist, wenigstens 20 Gew.-% Wasser zu enthalten, wenn das besagte Harz sich im Zustand eines Anfangskondensats vor dem Härten und Herstellen eines glasartigen Kohlenstoffmaterials befindet.

2. Verfahren nach Anspruch 1, dadurch gekennzeichnet, daß das hitzehärtbare Harz eine Harzzusammensetzung ist, die eine Viskosität von 100 bis 8000 · $10^{-3}$ P · s bei 25°C aufweist, umfassend

(a) 70 bis 100 Gew.-Teile wenigstens eines Mitglieds ausgewählt aus der Gruppe bestehend aus einer Mischung von Formaldehyd mit Phenolharz, Furanharz oder phenolmodifiziertes Furancokondensat und

(b) 0 bis 30 Gew.-% Teile wenigstens eines Mitglieds ausgewählt aus der Gruppe bestehend aus einer Mischung von Formaldehyd mit Harnstoff-Formaldehyd-Harz und/oder Melaminharz.

3. Verfahren nach Anspruch 2, dadurch gekennzeichnet, daß Teil (a) Phenol und Formaldehyd im Molverhältnis von 1:3 bis 1:0,5 enthält.

4. Verfahren nach Anspruch 2, dadurch gekennzeichnet, daß Teil (a) Furfurylalkohol und Formaldehyd im Molverhältnis von 1:1 bis 1:0 enthält.

5. Verfahren nach Anspruch 2, dadurch gekennzeichnet, daß Teil (a) Phenol und/oder Furfurylalkohol sowie Formaldehyd im Molverhältnis von 30:55 bis 75:30 enthält.

6. Verfahren nach einem der Ansprüche 2 bis 5, dadurch gekennzeichnet, daß Teil (b) Harnstoff und Formaldehyd im Molverhältnis von 1:2 bis 1:0,5 enthält.

7. Verfahren nach einem der Ansprüche 2 bis 5, dadurch gekennzeichnet, daß Teil (b) Melamin und Formaldehyd im Molverhältnis von 1:6 bis 1:0,5 enthält.

8. Verfahren nach einem der Ansprüche 2 bis 5, dadurch gekennzeichnet, daß Teil (b) Harnstoff und/oder Melamin sowie Formaldehyd im Molverhältnis von 30:55 bis 75:30 enthält.

9. Verfahren nach Anspruch 1, dadurch gekennzeichnet, daß das besagte hitzehärtbare Harz ein Harzzusammensetzung ist, die durch Cokondensieren von 15 bis 40 Phenol, 15 bis 35 Furfurylalkohol und 30 bis 55 Formaldehyd, basierend auf dem Molverhältnis umgerechnet in Monomer, erhalten wird.

10. Verfahren nach Anspruch 1, dadurch gekennzeichnet, daß das besagte hitzehärtbare Harz eine Harzzusammensetzung ist, die eine Viskosität von 100 bis 8000 · $10^{-3}$ P · s aufweist, umfassend

(a) 70 bis 100 Gew.-Teil wenigstens eines Mitglieds ausgewählt aus der Gruppe bestehend aus einer Mischung von Formaldehyd mit Phenolharz, Furanharz oder phenolmodifiziertem Furancokondensat,

(b) 0 bis 15 Gew.-Teile wenigstens eines Mitglieds ausgewählt aus der Gruppe bestehend aus Lignin, modifiziertem Harz und modifizierter Cellulose und

(c) 0 bis 15 Gew.-Teil wenigstens eines Mitglieds ausgewählt aus der Gruppe bestehend aus einer Mischung von Formaldehyde mit Harnstoff-Formaldehyd-Harz und/oder Melaminharz.

15

**11.** Verfahren nach Anspruch 10, dadurch gekennzeichnet, daß Teil (a) Phenol und Formaldehyd im Molverhältnis von 1:3,5 bis 1:0,5 enthält.

**12.** Verfahren nach Anspruch 10, dadurch gekennzeichnet, daß Teil (a) Furfurylalkohol und Formaldehyd im Molverhältnis von 1:1,2 bis 1,0 enthält.

**13.** Verfahren nach Anspruch 10, dadurch gekennzeichnet, daß Teil (a) Phenol und/oder Furfurylalkohol sowie Formaldehyd im Molverhältnis von 30:55 bis 75:30 enthält.

**14.** Verfahren nach einem der Ansprüche 10 bis 13, dadurch gekennzeichnet, daß Teil (c) Harnstoff und Formaldehyd in einem Molverhältnis von 1:2 bis 1:0.5 enthält.

**15.** Verfahren nach einem der Ansprüche 10 bis 13, dadurch gekennzeichnet, daß Teil (c) Melamin und Formaldehyd im Molverhältnis von 1:6 bis 1:0,5 enthält.

**16.** Verfahren nach einem der Ansprüche 10 bis 13, dadurch gekennzeichnet, daß Teil (c) Harnstoff, Melamin und Formaldehyd im Molverhältnis von 30:55 bis 75:30 enthält.

**17.** Verfahren nach Anspruch 1, dadurch gekennzeichnet, daß das hitzehärtbare Harz eine Harzzusammensetzung ist, die eine Viskosität von 100 bis 8000 · 10⁻³ P · s bei 25°C besitzt, umfassend

(a) 70 bis 100 Gew.-Teile wenigstens eines Mitglieds ausgewählt aus der Gruppe bestehend aus einer Mischung von Formaldehyd mit Phenolharz, Furanharz oder phenolmodifiziertem Furancokondensat und

(b) 0 bis 30 Gew.-Teile wenigstens eines Mitglieds ausgewählt aus der Gruppe aus Lignin, modifiziertes Harz und modifizierte Cellulose.

**18.** Verfahren nach Anspruch 17, dadurch gekennzeichnet, daß Teil (a) Phenol und Formaldehyd im Molverhältnis 1:4 bis 1:0,5 enthält.

**19.** Verfahren nach Anspruch 17, dadurch gekennzeichnet, daß Teil (a) Furfurylalkohol and Formaldehyd im Molverhältnis 1:1,3 bis 1:0 enthält.

**20.** Verfahren nach Anspruch 17, dadurch gekennzeichnet, daß Teil (a) Phenol und/oder Furfurylalkohol und Formaldehyd im Molverhältnis 1:4 bis 1:0 enthält.

**Revendications**

**1.** Procédé pour fabriquer un matériau en carbone vitreux, comprenant la carbonisation et le frittage d'une résine thermodurcissable dans une atmosphère inerte à une température d'au moins 800°C, caractérisé en ce qu'on utilise un produit de condensation initiale d'une résine thermodurcissable, qui est capable de contenir au moins 20% en poids d'eau lorsque ladite résine est à l'état d'un produit de condensation initiale avant le durcissement et la production d'un matériau en carbone vitreux.

**2.** Procédé selon la revendication 1, caractérisé en ce que la résine thermodurcissable est une composition de résines ayant une viscosité de 100 à 8000×10⁻³ Pa · s à 25°C comprenant:

(a) 70 à 100 parties en poids d'au moins un élément choisi dans le groupe formé par un mélange de formaldéhyde avec une résine phénolique, une résine de furanne ou un produit de co-condensation de furanne modifié par du phénol; et

(b) 0 à 30 parties en poids d'au moins un élément choisi dans le groupe formé par un mélange de formaldéhyde avec une résine d'urée ou une résine de mélamine ou les deux.

**3.** Procédé selon la revendication 2, caractérisé en ce que le composant (a) contient du phénol et du formaldéhyde en un rapport molaire de 1:3 à 1:0,5.

**4.** Procédé selon la revendication 2, caractérisé en ce que le composant (a) contient de l'alcool furfurylique et du formaldéhyde en un rapport molaire de 1:1 à 1:0.

**5.** Procédé selon la revendication 2, caractérisé en ce que le composant (a) contient du phénol ou de l'alcool furfurylique ou les deux, et du formaldéhyde, en un rapport molaire de 30:55 à 75:30.

**6.** Procédé selon l'une des revendications 2 à 5, caractérisé en ce que le composant (b) contient de l'urée et du formaldéhyde en un rapport molaire de 1:2 à 1:0,5.

**7.** Procédé selon l'une des revendications 2 à 5, caractérisé en ce que le composant (b) contient de la mélamine et du formaldéhyde en un rapport molaire de 1:6 à 1:0,5.

**8.** Procédé selon l'une des revendications 2 à 5, caractérisé en ce que le composant (b) contient de l'urée ou de la mélamine ou les deux, et du formaldéhyde, en un rapport molaire de 30:55 à 75:30.

**9.** Procédé selon la revendication 1, caractérisé en ce que ladite résine thermodurcissable est une composition de résines obtenue par co-condensation de 15 à 40 de phénol, 15 à 35 d'alcool furfurylique et 30 à 55 de formaldéhyde, sur la base du rapport molaire ramené aux monomères.

**10.** Procédé selon la revendication 1, caractérisé en ce que ladite résine thermodurcissable est une composition de résines ayant une viscosité de 100 à 8000×10⁻³ Pa · s à 25°C comprenant:

(a) 70 à 100 parties en poids d'au moins un élément choisi dans le groupe formé par un mélange de formaldéhyde avec une résine phénolique, une résine de furanne ou un produit de co-condensation de furanne modifié par du phénol;

(b) 0 à 15 parties en poids d'au moins un élément choisi dans le groupe formé par la lignine, une résine modifiée et une cellulose modifiée; et

(c) 0 à 15 parties en poids d'au moins un élément choisi dans le groupe formé par un mélange de formaldéhyde avec une résine d'urée ou une résine de mélamine ou les deux.

**11.** Procédé selon la revendication 10, caractérisé en ce que le composant (a) contient du phénol et du formaldéhyde en un rapport molaire de 1:3,5 à 1:0,5.

12. Procédé selon la revendication 10, caractérisé en ce que le composant (a) contient de l'alcool furfurylique et du formaldéhyde en un rapport molaire de 1:1,2 à 1:0.

13. Procédé selon la revendication 10, caractérisé en ce que le composant (a) contient du phénol ou de l'alcool furfurylique ou les deux, et du formaldéhyde, en un rapport molaire de 30:55 à 75:30.

14. Procédé selon l'une des revendications 10 à 13, caractérisé en ce que le composant (c) contient de l'urée et du formaldéhyde en un rapport molaire de 1:2 à 1:0,5.

15. Procédé selon l'une des revendications 10 à 13, caractérisé en ce que le composant (c) contient de la mélamine et du formaldéhyde en un rapport molaire de 1:6 à 1:0,5.

16. Procédé selon l'une des revendications 10 à 13, caractérisé en ce que le composant (c) contient de l'urée, de la mélamine et du formaldéhyde en un rapport molaire de 30:55 à 75:30.

17. Procédé selon la revendication 1, caractérisé en ce que ladite résine thermodurcissable est une composition de résines ayant une viscosité de 100 à 8000×10⁻³ Pa·s à 25°C comprenant:

(a) 70 à 100 parties en poids d'au moins un élément choisi dans le groupe formé par un mélange de formaldéhyde avec une résine phénolique, une résine de furanne ou un produit de co-condensation de furanne modifié par du phénol; et

(b) 0 à 30 parties en poids d'au moins un élément choisi dans le groupe formé par la lignine, une résine modifiée et une cellulose modifiée.

18. Procédé selon la revendication 17, caractérisé en ce que le composant (a) contient du phénol et du formaldéhyde en un rapport molaire de 1:4 à 1:0,5.

19. Procédé selon la revendication 17, caractérisé en ce que le composant (a) contient de l'alcool furfurylique et du formaldéhyde en un rapport molaire de 1:1,3 à 1:0.

20. Procédé selon la revendication 17, caractérisé en ce que le composant (a) contient du phénol ou de l'alcool furfurylique ou les deux, et du formaldéhyde, en un rapport molaire de 1:4 à 1:0.

FIG.1

1

20μm

20μm

Fig. 2

Fig. 3